# EUROPEAN PATENT APPLICATION

(11) **EP 4 358 270 A1**
(43) Date of publication of application: **24.04.2024**
(21) Application number: 23807749.9
(22) Date of filing: 02.03.2023
(51) Int. Cl.: H01M 50/449, H01M 50/446, H01M 50/417, H01M 50/431, H01M 50/443, H01M 50/489

(54) **METHOD FOR MANUFACTURING LITHIUM SECONDARY BATTERY SEPARATOR, LITHIUM SECONDARY BATTERY SEPARATOR MANUFACTURED THEREBY, AND LITHIUM SECONDARY BATTERY COMPRISING SAME**

(30) Priority: 17.05.2022 KR 20220060057
(71) Applicant: LG Energy Solution, Ltd., Seoul 07335 (KR)
(72) Inventor: JEONG, So-Mi, Daejeon 34122 (KR); BAE, Won-Sik, Daejeon 34122 (KR); LEE, So-Yeong, Daejeon 34122 (KR); PARK, So-Jung, Daejeon 34122 (KR); KIM, Kyung-Tae, Daejeon 34122 (KR); BAE, Kyeong-Hui, Daejeon 34122 (KR)
(74) Representative: Hoffmann Eitle
(86) International application number: PCT/KR2023/002842
(87) International publication number: WO 2023/224224

(57) **Abstract**

The present disclosure provides a method of manufacturing a separator for a lithium secondary battery, the method including a step (S1) of preparing a slurry in which a binder polymer is dissolved and inorganic particles are dispersed, the slurry being prepared by adding and mixing the binder polymer and the inorganic particles in a solvent, and a step (S2) of forming a porous coating layer by applying and drying the slurry on at least one surface of a porous polyolefin polymer substrate having a plurality of pores. The thickness of the porous polyolefin polymer substrate is 9 µm or less, the D90 particle size of the inorganic particles dispersed in the slurry is 3 µm or less, and the surface roughness Ra of the porous coating layer is 50 to 500 nm.

## Description

### Technical Field

The present disclosure claims the benefit of the filing date of Korean Patent Application No. 10-2022-0060057 filed with the Korean Intellectual Property Office on May 17, 2022, all of which are included in the present disclosure.

The present disclosure relates to a method for manufacturing a separator for a lithium secondary battery in which a porous coating layer including a binder polymer and inorganic particles is formed on the surface of a porous polyolefin polymer substrate, a separator for a lithium secondary battery prepared therefrom, and a lithium secondary battery having the same.

### Background Art

A Porous substrate with multiple pores and based on polymers such as polyolefins are being used as separators for lithium secondary batteries.

To enhance the heat resistance properties of these porous polymer substrates, a separator with a porous coating layer including binder polymers and inorganic particles on the surface of the polymer substrate has been developed.

In the above-described separator for a lithium secondary battery, the average pore diameter of the porous polymeric substrate may be adjusted according to the application. For example, a separator used in a lithium secondary battery for an electric vehicle has an average pore diameter of 40 to 80 nm of a porous polyolefin polymer substrate and is prepared by dispersing inorganic particles in a polymer solution in which a binder polymer is dissolved in a solvent to prepare a slurry, which is then coated on the surface of the porous polymer substrate and dried.

In general, an electrode assembly is manufactured through a lamination process in which a separator and an electrode are bonded by heat and pressure, and the higher the heat and pressure applied in this process, the higher the binding force between the electrode and the separator. Recently, as the processing speed has been increased for the purpose of improving productivity, the time for which heat is applied during lamination has been shortened, and thus the adhesive strength is secured by increasing the pressure to secure the adhesive strength.

However, in order to realize high energy density, thinning of the separator is required. A porous polymer substrate of conventional thickness is unlikely to cause insulation problems due to its sufficient thickness, even if localized pressure is increased by inorganic particles in the porous coating layer. However, when the thickness of the porous polymer substrate is thinned to 9 µm or less, protrusions formed by local aggregation of inorganic particles of the porous coating layer may exert pressure on the porous polymer substrate of the separator and cause damage, resulting in a decrease in insulation.

### Disclosure

### Technical Problem

An objective of the present disclosure is to provide a method for manufacturing a separator for a lithium secondary battery having a porous coating layer including a binder polymer and inorganic particles and a thin-film porous polyolefin polymer substrate, and having improved compression resistance, and having a high dielectric breakdown voltage during a lamination process for manufacturing an electrode assembly and good life characteristics.

Another objective of the present disclosure is to provide a separator for a lithium secondary battery manufactured by the manufacturing method having the above characteristics and a lithium secondary battery having the same.

It will be readily apparent that the objectives and advantages of the present disclosure may be realized by means or methods and combinations thereof recited in the claims.

### Technical Solution

The first aspect of the present disclosure provides
a method for manufacturing a separator for a lithium secondary battery, the method including: (S1) preparing a slurry by adding a binder polymer and inorganic particles to a solvent, followed by mixing, so that the binder polymer is dissolved in the solvent and the inorganic particles are dispersed in the solvent; and
(S2) forming a porous coating layer on at least one surface of a porous polyolefin polymer substrate having a plurality of pores by applying and drying the slurry on the at least one surface, in which
the porous polyolefin polymer substrate has a thickness of 9 µm or less,
the inorganic particles dispersed in the slurry has a D90 of 3 µm or less, and
the porous coating layer has a surface roughness Ra in a range of 50 to 500 nm.

A second aspect of the present disclosure provides a method for manufacturing a separator for a lithium secondary battery, according to the first aspect, in which
the D90 of the inorganic particles dispersed in the slurry is 2 µm or less, more specifically, the D90 of the inorganic particles dispersed in the slurry is 0.5 to 1.4 µm, and even more specifically, the D90 of the inorganic particles dispersed in the slurry is 0.9 to 1.3 µm.

A third aspect of the disclosure provides a method for manufacturing a separator for a lithium secondary battery according to the first or second aspect, in which
the D50 of the inorganic particles added to the slurry is 100 to 700 nm, and the D90 is 2000 nm or less, more specifically, the D50 of the inorganic particles added to the slurry is 100 to 500 nm, and the D90 is 1500 nm or less, and more specifically, the D50 of the inorganic particles added to the slurry is 200 to 400 nm and the D90 is 800 nm or less.

A fourth aspect of the present disclosure provides a method for manufacturing a separator for a lithium secondary battery, according to any one of the first to third aspects, in which
the porous coating layer has a surface roughness Ra of 200 to 450 nm, and more particularly in which the porous coating layer has a surface roughness Ra of 250 to 420 nm.

A fifth aspect of the present disclosure provides a method for manufacturing a separator for a secondary battery, according to any one of the first to fourth aspects, in which
the thickness of the porous coating layer is 3 µm or less based on the thickness of the porous coating layer formed on one surface.

A sixth aspect of the present disclosure provides a separator for a lithium secondary battery manufactured according to the method of any one of the first to fifth aspects.

A seventh aspect of the present disclosure provides a lithium secondary battery including an electrode assembly including a cathode, an anode, and a separator interposed between the cathode and anode, in which the separator is a separator according to the sixth aspect.

### Advantageous Effects

The present disclosure is a method for manufacturing a separator in which a porous coating layer including a binder polymer and inorganic particles is provided on the surface of a thin-film porous polymer substrate, and by controlling the D90 of the inorganic particles dispersed in a slurry for forming the porous coating layer and controlling the surface roughness of the formed porous coating layer to a predetermined range, the compression resistance of the separator is improved.

Accordingly, even if high pressure is applied during the lamination process for manufacturing an electrode assembly, the thickness reduction rate of the porous polyolefin polymer substrate caused by high applied pressure is low, so the possibility of damage is improved, and the dielectric breakdown voltage of the separator is not lowered, and the insulation property is high.

### Mode for Invention

Hereinafter, the present disclosure will be described in detail. Prior to this, the terms or words used in the present specification and claims should not be construed as being limited to conventional or dictionary meanings. Based on the principle that the inventor may properly define the concept of a term to best describe his invention, the disclosure is to be construed in a meaning and concept consistent with the technical idea of the invention. Accordingly, this disclosure is to be understood that the configurations described in the embodiments described herein are only the most preferred embodiments of the invention and are not exhaustive of the technical idea of the invention, and that there may be various equivalents and variations that may replace them at the time of filing.

Throughout this specification, when a part "includes" a certain component, it means that other components may be further included, rather than excluding other components unless otherwise stated.

In the present specification, the characteristic of having pores means that a gaseous and/or liquid fluid can pass from one side of the object to the other side by a structure in which the object includes a plurality of pores and is interconnected between the pores.

In the present specification, the separator has a porous property including a plurality of pores and serves as an ion-conducting barrier to pass ions while blocking electrical contact between the cathode and the anode in an electrochemical device.

Hereinafter, a method for manufacturing a separator for a lithium secondary battery, according to the present disclosure, will be described in detail.

The method for manufacturing a separator for a lithium secondary battery of the present disclosure includes: (S1) preparing a slurry by adding a binder polymer and inorganic particles to a solvent, followed by mixing, so that the binder polymer is dissolved in the solvent and the inorganic particles are dispersed in the solvent; and (S2) forming a porous coating layer on at least one surface of a porous polyolefin polymer substrate having a plurality of pores by applying and drying the slurry on the at least one surface, in which
the porous polyolefin polymer substrate has a thickness of 9 µm or less,
the inorganic particles dispersed in the slurry has a D90 of 3 µm or less, and
the porous coating layer has a surface roughness Ra in a range of 50 to 500 nm.

First, a slurry in which the binder polymer is dissolved, and the inorganic particles are dispersed is prepared by adding and mixing the binder polymer and the inorganic particles in a solvent (step S1).

Inorganic particles constituting the skeleton of the porous coating layer are not particularly limited as long as they are electrochemically stable. For example, the inorganic particles that can be used in the present disclosure are not particularly limited as long as oxidation and/or reduction reactions do not occur in the operating voltage range of the applied batteries (e.g., 0 to 5 V based on Li/Li⁺).

Examples of the above-described inorganic particles include high dielectric constant inorganic particles having a dielectric constant of 1 or more, preferably 10 or more, inorganic particles having piezoelectricity, inorganic particles having lithium ion transfer ability, and the like.

In other words, the inorganic particles include but are not limited to, SrTiO₃, SnO₂, CeO₂, MgO, NiO, CaO, ZnO, ZrO₂, Y₂O₃, Al₂O₃, AlOOH, Al(OH)₃, TiO₂, SiC, and the like, which may be mixed with one or more thereof.

In addition, piezoelectricity inorganic particles refer to materials that are insulators under normal pressure but have properties of conducting electricity due to internal structural changes when a certain pressure is applied. These piezoelectric inorganic particles have a high dielectric constant value of 100 or more. In addition, when a certain pressure is applied and stretched or compressed, charges are generated. As one side is positively charged and the other side is negatively charged, a potential difference is generated between the two sides. In the case of using such piezoelectric inorganic particles, when an internal short circuit of both electrodes occurs due to an external impact such as a local crush or nail, the piezoelectricity of the inorganic particles causes an intra-particle potential difference to occur, which results in electron movement between the two electrodes, i.e., a small current flow, thereby gentle reducing the voltage of the battery and improving safety. Examples of the inorganic particles having piezoelectricity may include BaTiO₃, Pb(Zr,Ti)O₃ (PZT), Pb₁₋ₓLaₓZr_{1-y}Ti_{y}O₃ (PLZT), Pb (Mg_{1/3}Nb_{2/3}) O₃-PbTiO₃ (PMN-PT), hafnia (HfO₂), or a mixture thereof but is not limited thereto.

Inorganic particles having lithium ion transfer ability refer to inorganic particles that contain a lithium element but do not store lithium and have a function of moving lithium ions. Since inorganic particles having lithium ion transfer ability can transfer and move lithium ions due to a kind of defect existing inside the particle structure, lithium ion conductivity in the battery is improved, thereby improving battery performance. Examples of the inorganic particles having the lithium ion transfer ability include lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z})(PO₄)₃, 0<x<2, 0<y<1, 0<z<3), (LiAlTiP)ₓO_{y}-based glass (0<x<4, 0<y<13), such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), such as Li_{3.25}Ge_{0.25}P_{0.75}S₄, etc., lithium nitride (LiₓN_{y}, 0<x<4, 0<y<2), such as Li₃N, SiS₂-based glass (LiₓSi_{y}S_{z}, 0<x<3, 0<y<2, 0<z<4), such as Li₃PO₄-Li₂S-SiS₂, P₂S₅-based glass (LiₓP_{y}S_{z}, 0<x<3, 0<y<3, 0<z<7), such as LiI-Li₂S-P₂S₅, etc., or a mixture thereof but is not limited thereto.

The inorganic particles added to the slurry may have a D50 of 100 to 700 nm and a D90 of 2,000 nm or less. Specifically, D50 of the inorganic particles may be 150 to 650 nm, 200 to 600 nm, 250 to 550 nm, 300 to 500 nm, or 350 to 450 nm, and D90 of the inorganic particles may be 1,900 nm or less, 1,800 nm or less, 1,700 nm or less, 1,600 nm or less, 1,500 nm or less, 1,400 nm or less, 1,300 nm or less, 1,200 nm or less, 1,100 nm or less, 1,000 nm or less, 900 nm or less, or 800 nm or less. Preferably, the inorganic particles may have a D50 of 100 to 500 nm and a D90 of 1,500 nm or less, and more preferably, the inorganic particles may have a D50 of 200 to 400 nm and a D90 of 800 nm or less. When the inorganic particles having the aforementioned particle size range are added to the slurry, the D90 of the inorganic particles dispersed in the slurry may be adjusted to a desired range, for example, D90 of 3 µm. When the D50 of the inorganic particles exceeds 700 nm, or the D90 exceeds 2,000 nm, there is a high risk that the inorganic particles form protrusions on the porous coating layer formed, and thus, the possibility of damaging the porous polymer substrate during the lamination process increases.

The binder polymer dissolved in the slurry provides adhesion of the porous coating layer to the polyolefin polymer substrate and the electrode while connecting and fixing the inorganic particles. Examples of binder polymers may include at least one polymer selected from the group consisting of polyvinylidene fluoride-co-hexafluoropropylene, polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, polyarylate, cyanoethylpullulan, cyanoethylpolyvinylalcohol, cyanoethylcellulose, cyanoethyl sucrose, pullulan and carboxyl methyl cellulose, or a mixture of two or more thereof. However, the present disclosure is not particularly limited thereto.

The binder polymer and the inorganic particles may be included in a weight ratio of 1:99 to 50:50. The ratio may be appropriately adjusted within the above range, for example, the binder polymer may be 1% by weight or more, 5% by weight or more, 10% by weight or more, 15% by weight or more, 20% by weight or more, 25% by weight or more, or 30% by weight or more based on 100% by weight of the sum of the binder polymer and the inorganic particles, and the inorganic particles may be 70% by weight or more, 75% by weight or more, 80% by weight or more, 85% by weight or more, 90% by weight or more, 95% by weight or more, or 99% by weight or more based on 100% by weight of the sum of the binder polymer and the inorganic particles.

The above-described binder polymer and inorganic particles are added to a solvent and mixed to prepare a slurry in which the binder polymer is dissolved, and the inorganic particles are dispersed. A binder polymer may be first added to a solvent to prepare a polymer solution, and then inorganic particles may be added and mixed thereto, or inorganic particles may be added to a solvent and then a binder polymer may be added and mixed.

In the present disclosure, the D90 of the inorganic particles dispersed in the prepared slurry is adjusted to 3 µm or less. Specifically, the D90 of the inorganic particles dispersed in the slurry may be 2.9 µm or less, 2.8 um or less, 2.7 um or less, 2.6 um or less, 2.5 um or less, 2.4 um or less, 2.3 µm or less, 2.2 µm or less, 2.1 µm or less, 2.0 um or less or less, 1.9 um or less, 1.8 um or less, 1.7 um or less, 1.6 um or less, 1.5 um or less, 1.4 um or less, or 1.3 µm or less. Inorganic particles added in the slurry aggregate with each other, increasing the D90. When the D90 of the inorganic particles in the slurry exceeds 3 µm, there is a high risk that the inorganic particles form protrusions on the porous coating layer formed, and thus the possibility of damaging the porous polymer substrate during the lamination process increases. Preferably, the D90 of the inorganic particles dispersed in the slurry may be 2 µm or less, more preferably, the D90 of the inorganic particles dispersed in the slurry may be 0.5 to 1.4 um, and most preferably, the D90 of the inorganic particles dispersed in the slurry may be 0.9 to 1.3 um.

Accordingly, the D90 of the inorganic particles dispersed in the slurry is adjusted to 3 µm or less by adjusting the addition of the dispersant, the pre-mixing and the milling process, and the like. For example, the D90 of the inorganic particles dispersed in the slurry can be adjusted by a method as follows: first preparing a slurry to which the inorganic particles and a portion of the binder polymer are added after further adding a dispersant to the slurry, mixing and milling the slurry , then adding a polymer solution with the remaining amount of polymer to the slurry and mixing and milling the slurry, but is not limited thereto.

The slurry prepared to have the aforementioned properties is coated and dried on at least one side of a porous polyolefin polymeric substrate having a plurality of pores to form a porous coating layer (step S2).

In the present disclosure, as is well known, the porous polyolefin polymer substrate is prepared using polyolefin as a base polymer. Examples of polyolefin-based polymer include polyethylene, polypropylene, polypentene, and the like, and may include one or more thereof. Porous, i.e., polymer substrates having a large number of pores, prepared on the basis of such polyolefins are advantageous from the point of view of imparting a shutdown function at an appropriate temperature. In particular, the simultaneous inclusion of polyethylene and polypropylene as polyolefins can simultaneously improve properties such as shutdown properties and mechanical strength.

When preparing the polymer substrate, other polymer components may be further mixed as needed in addition to the above-described polyolefin-based polymer, and filler particles may be further included. Filler particles may be introduced for the purpose of a pressure barrier in order not to excessively decrease the thickness, pore size, and porosity of the separator substrate with respect to a high pressure applied in a lamination process. Filler particles may include an organic filler or an inorganic filler having a predetermined particle size and is not limited to a specific component as long as it has a strength greater than or equal to the polyolefin resin.

In the present disclosure, the thickness of the porous polyolefin polymer substrate is 9 µm or less. Since this porous polyolefin polymer substrate having a thickness of 9 µm or less is a thin film, it is possible to implement a lithium secondary battery having a high energy density. The thickness of the porous polyolefin polymer substrate may be more specifically 7 to 9 µm, and even more specifically 8 to 9 µm, but is not limited thereto.

The porous polyolefin polymer substrate described above may be prepared as follows but is not limited thereto.

In one embodiment of the present disclosure, the porous polyolefin polymer substrate may be prepared by a method (dry method) in which the polyolefin polymer is melt extruded, formed into sheets, and then stretched to cause micro-cracks between lamellae, which are crystalline portions of the polymer, to form micropores. Alternatively, the polymer film member may be prepared by kneading a polymer material with diluents at a high temperature to form a single phase, phase-separating the polymer material and plasticizer in a cooling process, and then extracting the plasticizer to form pores (wet method).

When a filler is added, the size of the filler particle may be 0.001 um to less than 100 um. Preferably, the filler particle may have a particle size of 0.01 to 0.1 µm and may be appropriately adjusted within the above range in consideration of the target thickness after the lamination process of the separator substrate.

The thickness of the porous coating layer formed may be 3 µm or less based on the thickness of the porous coating layer formed on one surface but is not limited thereto.

Meanwhile, the surface roughness Ra of the formed porous coating layer is 50 to 500 nm. When the surface roughness Ra is less than 50 nm, electrode adhesiveness may deteriorate, and when the surface roughness Ra is more than 500 nm, there may be protrusions that locally cause deformation of the polymer substrate during lamination. In this aspect, the surface roughness Ra of the porous coating layer may be 200 to 450 nm, more specifically, the surface roughness Ra of the porous coating layer may be 250 to 420 nm.

The surface roughness Ra of the porous coating layer depends on the D90 of the inorganic particles dispersed in the slurry described above and the coating method of the slurry, and in this respect, the coating method is preferably, a micro gravure coating method or a direct metering coating method, but is not limited thereto. Furthermore, the drying method appropriately sets temperature and time conditions to minimize the occurrence of surface defects in the porous coating layer. The drying may be performed by a drying aid device such as a drying oven or hot air within an appropriate range.

The separator for a lithium secondary battery manufactured by the above method is manufactured into a lithium secondary battery by being interposed between a cathode and an anode to form an electrode assembly. That is, the separator for a lithium secondary battery manufactured by the above method is interposed between the anode and the cathode and is manufactured as an electrode assembly by a lamination process in which heat and/or pressure are applied to bind the separator. In one embodiment of the present disclosure, the lamination process may be performed by a roll press device including a pair of pressure rollers. That is, an anode, a separator, and a cathode are sequentially stacked and put between the pressure rollers to achieve interlayer bonding. In this case, the lamination process may be performed by a pressurizing method with heat.

The cathode includes a cathode current collector and a cathode active material layer, including a cathode active material, a conductive material, and a binder resin on at least one surface of the current collector. The cathode active material may include one or a mixture of two or more among layered compounds such as lithium manganese oxide (LiMn₂O₄, LiMnO₂, etc.), lithium cobalt oxide (LiCoO₂), lithium nickel oxide (LiNiO₂), or a compound substituted with one or more transition metals; lithium manganese oxides of the formula Li₁₊ₓMn₂₋ₓO₄ (where x is 0 to 0.33), LiMnO₃, LiMn₂O₃, LiMnO₂, and the like; lithium copper oxide (Li₂CuO₂); vanadium oxides such as LiV₃O₈, LiV₃O₄, V₂O₃, and Cu₂V₂O₇; Ni site-type lithium nickel oxide represented by the formula LiNi₁₋ₓMxO₂ (where M = Co, Mn, Al, Cu, Fe, Mg, B, or Ga, and x = 0.01 to 0.3); lithium manganese composite oxides represented by the formula LiMn₁₋ₓMₓO₂ (where M = Co, Ni, Fe, Cr, Zn, or Ta and x = 0.01 to 0.1) or Li₂Mn₃MO₈ (where M = Fe, Co, Ni, Cu, or Zn); LiMn₂O₄ in which a part of Li in the formula is substituted with an alkaline earth metal ion; disulfide compounds; Fe₂(MoO₄)₃.

The anode includes an anode current collector and an anode active material layer, including an anode active material, a conductive material, and a binder resin on at least one surface of the current collector. The anode may include, as an anode active material, at least one or a mixture of two or more selected from the group consisting of carbons such as lithium metal oxide, non-graphitized carbon, and graphite-based carbon; metal composite oxides such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, elements of groups 1, 2, and 3 of the periodic table, halogen; 0<x≤1; 1≤y≤3; 1≤z≤8); lithium metal; lithium alloy; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₃; conductive polymers such as polyacetylene; Li-Co-Ni-based materials; titanium oxides.

The conductive material may include, for example, any one selected from the group consisting of graphite, carbon black, carbon fiber, or metal fiber, metal powder, conductive whisker, conductive metal oxide, carbon nanotube, activated carbon, and polyphenylene derivatives, or a mixture of two or more conductive materials. More specifically, the conductive material may be one selected from the group consisting of natural graphite, artificial graphite, super-p, acetylene black, Ketjen black, channel black, furnace black, lamp black, thermal black, denka black, aluminum powder, nickel powder, zinc oxide, potassium titanate, and titanium oxide, or a mixture of two or more of these conductive materials.

The current collector is not particularly limited as long as the current collector has high conductivity without causing a chemical change in the battery, and for example, stainless steel, copper, aluminum, nickel, titanium, calcined carbon, or surface treatment material of aluminum or stainless steel with carbon, nickel, titanium, silver, etc., may be used.

As the binder resin, a polymer commonly used for electrodes in the art may be used. Non-limiting examples of such binder resins include polyvinylidene fluoride-co-hexafluoropropylene, polyvinylidene fluoride-co-trichlorethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxyl methyl cellulose and the like, but are not limited thereto.

The electrode assembly prepared as described above may be loaded in an appropriate case and electrolyte solution may be injected to manufacture a battery.

The electrolyte solution comprises a salt having the same structure as A⁺B⁻, and A⁺ includes ions formed of alkali metal cations such as Li⁺, Na⁺, K⁺, or a combination thereof, and B⁻ includes ions formed of anions such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻, or a combination thereof. In the electrolyte solution, the salt may be dissolved or dissociated in an organic solvent selected from a group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran , N-methyl-2-pyrrolidone (NMP), ethylmethyl carbonate (EMC), gamma butyrolactone (γ-butyrolactone),or a combination thereof, but is not limited thereto.

A battery module including the battery including the electrode assembly as a unit cell, a battery pack including the battery module, and a device including the battery pack as a power source may be provided. Specific examples of the device include a power tool powered by a battery motor; electric vehicles, including electric vehicles (EVs), hybrid electric vehicles (HEVs), plug-in hybrid electric vehicles (PHEVs), and the like; electric two-wheeled vehicles, including electric bicycles (E-bikes) and electric scooters (E-scooter); electric golf carts; and a power storage system, but is not limited thereto.

Hereinafter, examples will be given to describe the present disclosure in detail. However, the embodiments according to the present disclosure may be modified in various other forms, and the scope of the present disclosure should not be construed as being limited to the embodiments described below. The embodiments of the present disclosure are provided to more completely explain the present disclosure to those of ordinary skilled in the art.

### [Example 1]

As a porous polyolefin polymeric substrate, a wet type polyethylene separator with a porosity of 45% from Toray (thickness: 8 µm) was used.

Meanwhile, a slurry in which the binder polymer was dissolved and the inorganic particles were dispersed was prepared by adding and mixing the binder polymer and the inorganic particles in a solvent, respectively, as follows.

At room temperature, Al₂O₃ inorganic particles (D50: 0.29 µm, D90: 0.69 µm), a dispersant (Disperbyk-111, BYK) diluted in acetone to a concentration of 25% was added to the acetone and stirred for 1 hour to prepare the pre-dispersion solution. The content of dispersant relative to the content of inorganic particles in the pre-dispersion solution was 1.25%, and the solids in the pre-dispersion solution were made to be 30%. The pre-dispersed solution was put into a bead mill disperser (Nano Intec, NITUBM-3) and milled twice in total with 0.7 mm beads and a rotor rotational speed of 1500 rpm. A mixed solution of cyanoethyl PVA (molecular weight 400,000), PVDF-HFP (molecular weight 400,000, HFP 8w%), and PVDF-HFP (molecular weight 500,000, HFP 15w%) dissolved in acetone and prepared at a concentration of 8% was added to the above milled pre-dispersion solution and further milled twice to prepare a slurry for forming a porous coating layer. At this time, the contents of cyanoethyl PVA (molecular weight 400,000), PVDF-HFP (molecular weight 400,000, HFP 8w%), and PVDF-HFP (molecular weight 500,000, HFP 15w%) were 1.25%, 13.8%, and 8.7%, respectively, compared to the inorganic content, and the solid content of the slurry was made 18%. Table 1 shows the results of measuring the D90 of the slurry prepared as described above.

The prepared slurry was filtered through a 200 mesh, coated on the above-described polymer-based substrate using a direct metering coater, and dried at a relative humidity of 40% and 50°C to form a porous coating layer coated on both sides. The thickness of the polymer-based substrate, the particle size of the inorganic particles introduced, the particle size of the inorganic particles in the slurry, the total thickness of the porous coating layer formed on both sides, and the surface roughness Ra of the porous coating layer were measured and shown in Table 1.

### [Example 2]

A separator was prepared in the same manner as in Example 1, except that the coating thickness was controlled to 3/3 µm on both sides.

### [Example 3]

A separator was prepared in the same manner as in Example 2, except that disperbyk111 and cyanoethyl PVA, which were dispersants, were added without being dissolved in acetone.

### [Example 4]

A separator was prepared in the same manner as in Example 3, except that the PE separator substrate was changed to have a thickness of 9 µm.

### [Comparative Example 1]

A separator was prepared in the same manner as in Example 2, except that the dispersant and the inorganic material were not pre-dispersed, but were added at the same time when the binder was added, and then were milled for a total of 4 times.

### [Comparative Example 2]

A separator was prepared in the same manner as in Example 2, except that the content of Cyanoethyl PVA was increased to 2.5% and added to the pre-dispersion solution, except for the disperbyk111 dispersant.

### [Comparative Example 3]

A separator was prepared in the same manner as in Comparative Example 2, except that the PE separator substrate was changed to have a thickness of 10 µm.

### [Measurement of D50 and D90 of inorganic particles]

D50 is defined as the particle size at 50% of the particle size distribution, D90 is defined as the particle size at 90% of the particle size distribution and is put into wet particle size analysis equipment (Mastersizer 3000, Malvern) and measured using the laser diffraction method.

### [Measurement of surface roughness Ra of porous coating layer]

10 random points were selected on the entire surface of the porous coating layer, and surface roughness Ra was measured using an optical profiler (NV-2700), and the average value was obtained.

### [Measurement of dielectric breakdown voltage after compression]

Release PET film cut into 10x10 cm was laminated on top and bottom of the separator cut into 5X5 cm. At this time, the releasing surface of the release PET film was brought into contact with the separator. A compressed separator sample was prepared by hot pressing the separator laminated with PET film for 10 seconds at a temperature of 70°C and a pressure of 5 MPa.

Place the prepared coated separator sample between aluminum jigs (upper jig diameter 30mm, lower jig 50 x 100 mm) and measure the voltage at which the fail condition (>0.5 mA, 3 sec) occurs with a Hi-pot tester. At this time, the measurement conditions were set to DC, current 0.5 mA, and voltage booster 100V/s (up to 3kV).

### [Capacity retention rate measurement]

### 1) Preparation of a cathode

A slurry for a cathode active material layer having a concentration of 50 % by weight except for water was prepared by mixing a cathode active material (LiNi_{0.8}Mn_{0.1}Co_{0.1}O₂), a conductive material (carbon black), a dispersing agent, and a binder resin (a mixture of PVDF-HFP and PVDF) with water in a weight ratio of 97.5: 0.7: 0.14: 1.66. Next, the slurry was applied on the surface of an aluminum thin film (thickness: 10 pm) and dried to prepare a cathode having a cathode active material layer (thickness: 120 pm).

### 2) Preparation of an anode

A slurry for a cathode active material layer having a concentration of 50 % by weight except for water was prepared by mixing a graphite (natural graphite and artificial graphite blend), a conductive material (carbon black), a dispersing agent, and a binder resin (a mixture of PVDF-HFP and PVDF) with water in a weight ratio of 97.5: 0.7: 0.14: 1.66. Next, the slurry was coated on the surface of a copper thin film (thickness: 10 pm) and dried to prepare an anode having an anode active material layer (thickness: 120 pm).

### 3) Lamination process

An electrode assembly was obtained by interposing the separators of Examples and Comparative Examples between the prepared anode and the cathode and performing a lamination process. The lamination process was performed for 10 seconds at 70°C with 5.2 MPa using a hot press.

### 4) Electrolyte solution injection

The electrolyte solution was prepared by dissolving lithium hexafluorophosphate (LiPF₆) at a concentration of 1.0 M in an organic solvent consisting of ethylene carbonate/ethyl methyl carbonate/diethyl carbonate (mixed volume ratio of EC/EMC/DEC = 3/4/3).

For the battery prepared by the above-described method, charge and discharge were repeated at 25°C at a rate of 2C, respectively, in the range of 2.5 to 4.25 V, and the ratio of discharge capacities after 50 cycles was derived by calculation.

**[Table 1]**

| | Total thickn ess (µm) | Thicknes s of polyolef in polymer substrat e (µm) | Thickne ss of the porous coating layer (based on the total thickne ss of double- | Particl e size of inorgan ic particl es added to the slurry D50/ D90 | Partic le size of inorga nic partic les disper sed in the slurry | Surfac e roughn ess Ra (µm) | Dielec tric breakd own voltag e after compre ssion (kV) | Capaci ty retent ion rate ) |
|---|---|---|---|---|---|---|---|---|
| | | | sided coating ) (µm) | (µm) | D90 (µm) | | | |
| Exampl e 1 | 12 | 8 | 2/2 | 0.29/0. 69 | 0.92 | 0.28 | 1.57 | 86 |
| Exampl e 2 | 14 | 8 | 3/3 | 0.29/0. 69 | 0.92 | 0.30 | 1.66 | 84 |
| Exampl e 3 | 14 | 8 | 3/3 | 0.29/0. 69 | 1.21 | 0.42 | 1.53 | 83 |
| Exampl e 4 | 15 | 9 | 3/3 | 0.29/0. 69 | 1.21 | 0.39 | 1.72 | 80 |
| Compar ative Exampl e 1 | 14 | 8 | 3/3 | 0.29/0. 69 | 3.5 | 0.73 | 1.23 | 72 |
| Compar ative Exampl | 15 | 8 | 3/3 | 0.29/0. 69 | 5.2 | 0.86 | 1.16 | 67 |
| e 2 | | | | | | | | |
| Compar ative Exampl e 3 | 16 | 10 | 3/3 | 0.29/0. 69 | 5.2 | 0.89 | 1.59 | 78 |

## Claims

1. A method for manufacturing a separator for a lithium secondary battery, the method comprising:
(S1) preparing a slurry by adding a binder polymer and inorganic particles to a solvent, followed by mixing, so that the binder polymer is dissolved in the solvent and the inorganic particles are dispersed in the solvent; and
(S2) forming a porous coating layer on at least one surface of a porous polyolefin polymer substrate having a plurality of pores by applying and drying the slurry on the at least one surface, wherein
the porous polyolefin polymer substrate has a thickness of 9 µm or less,
the inorganic particles dispersed in the slurry has a D90 particle size in a range of 3 µm or less, and
the porous coating layer has a surface roughness Ra in a range of 50 to 500 nm.

2. The method of claim 1, wherein the inorganic particles dispersed in the slurry has a D90 particle size of 2 µm or less.

3. The method of claim 1, wherein the inorganic particles dispersed in the slurry has a D90 particle size of 0.5 to 1.4 µm.

4. The method of claim 1, wherein the inorganic particles dispersed in the slurry has a D90 particle size of 0.9 to 1.3 µm.

5. The method of claim 1, wherein the inorganic particles added to the slurry have a D50 particle size of 100 to 700 nm and a D90 particle size of 2,000 nm or less.

6. The method of claim 1, wherein the inorganic particles added to the slurry have a D50 particle size of 100 to 500 nm and a D90 particle size of 1,500 nm or less.

7. The method of claim 1, wherein the inorganic particles added to the slurry have a D50 particle size of 200 to 400 nm and a D90 particle size of 800 nm or less.

8. The method of claim 1, wherein the porous coating layer has a surface roughness Ra in a range of 200 to 450 nm.

9. The method of claim 1, wherein the porous coating layer has a surface roughness Ra in a range of 250 to 420 nm.

10. The method of claim 1, wherein the porous coating layer has a thickness of 3 µm or less based on the thickness of the porous coating layer formed on one surface.

11. A separator for a lithium secondary battery manufactured by the method in any one of claims 1 to 10.

12. A lithium secondary battery equipped with an electrode assembly comprising a cathode, an anode, and a separator interposed between the cathode and the anode, wherein the separator is the separator of claim 11.
